# EUROPEAN PATENT APPLICATION

(11) **EP 1 293 787 A2**
(43) Date of publication of application: **19.03.2003**
(21) Application number: 02015633.7
(22) Date of filing: 16.07.2002
(51) Int. Cl.: G01R 31/30

(54) **Testing system and method of non-invasive testing**

(30) Priority: 18.07.2001 US 908167
(71) Applicant: TRW Inc., Redondo Beach, California 90278 (US)
(72) Inventor: Boolos, Timothy L., Mary Esther, Florida 32569 (US); Chandler, Billy J., Fort Walton Beach, Florida 32548 (US)
(74) Representative: Schmidt, Steffen J., Dipl.-Ing.

(57) **Abstract**

The present invention is a testing system and method for testing a system having at least one data source (12, 14, 16, 18) from which test data is acquired. An interface (50) acquires test data from the data source and converts the test data into a data output formatted with a data protocol. A slave processor (40) controls acquisition of test data by the interface coupled thereto and processes the data output received from the interface which is transmitted as a data transmission. A master processor (30) receives the data transmissions and controls the testing of the system by transmitting commands to each slave processor. Each slave processor controls the interface in accordance with the commands. Each processor communicates via the target system power bus using an interface wafer and powerline modulation and algorithms.

## Description

### BACKGROUND OF THE INVENTION

### Field of the Invention

The present invention relates to systems and methods for testing systems without requiring the addition of new wiring to the system being tested, such as, but not limited to, to the testing of modifications to aircraft.

### Description of the Prior Art

It is known that the power bus of a system such as a vehicle may be used to transmit information between components of the system by transmitting a modulated carrier over the bus which contains information to be transmitted between the components. See United States Patents 4,438,519, 4,641,322 and 6,127,939.

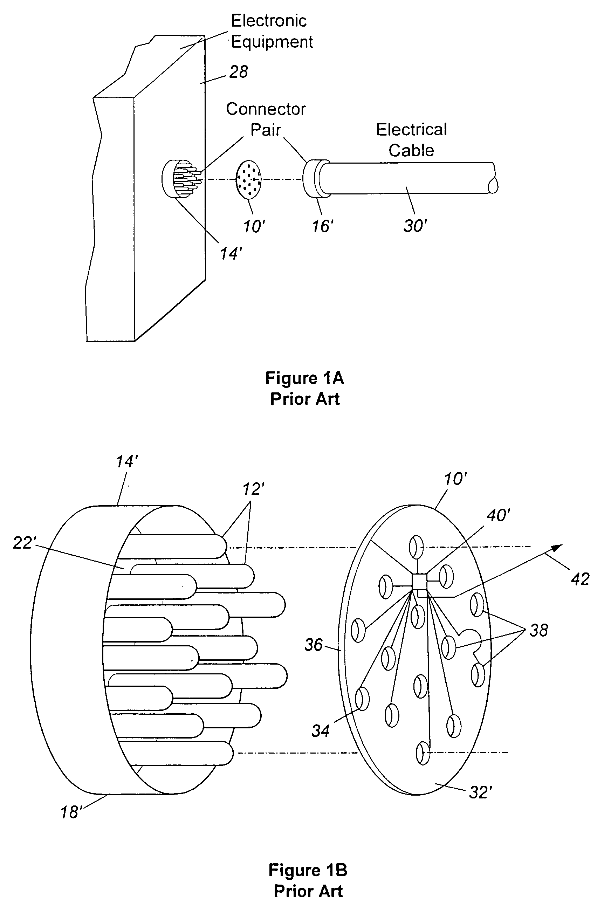

Figs. 1A and 1B illustrate an interface conditioning insert wafer in accordance with the Assignee's United States Patent 5,290,191 which is incorporated herein by reference in its entirety. The interior of the male connector 14' includes a nonconductive plate 22' that maintains the orientation of the pins 12' and provides insulation thereof from the conductive shell 18'. The female connector 16' likewise includes a nonconductive plate (not illustrated) and an array of sockets (not illustrated) for receiving the pins 12'.

The male connector 14' is shown in Fig. 1A as being coupled to electronic equipment 28. The female connector 16' is mounted on one end of an electrical cable 30'. The cable contains a plurality of wires that carry electrical signals between the electronic equipment 28 and other parts of the system of which the electronic equipment is a part when the connectors 14' and 16' are mated together.

The insert wafer 10' is removably inserted between the mated connectors 14' and 16' in order to permit an interface to be made between the electronic equipment 28 and another part of the system of which the electronic equipment is a part. The insert wafer 10' has a diameter smaller than the inner diameter of the smallest connector shell and is thin enough to be inserted between the connector pair when mated together without interfering with the positive connection there between. For a MIL-C-38999 connector pair, the maximum wafer thickness may be 0.030" so as not to interfere with normal connector mate. Insert wafer 10' includes two generally parallel major surfaces 32 and 34, along with a peripheral edge 36. A series of holes 38 are formed between the two major faces of the wafer. Holes 38 are aligned with and slightly larger than the diameter of pins 12'.

Circuitry, generally designated by the numeral 40', is formed on the insert wafer 10' and is in electrical contact with one or more of the pins 12'. The circuitry 40' may also include one or more wires 42' which provide a connection to systems, components, etc., which are external to the system in which the electronic equipment 28 is contained. The circuitry 40' can be any of a wide variety of devices such as active and passive electronic components, as well as more sophisticated microprocessing circuitry. The circuitry 40' is generally designed to perform preselected functions associated with the conditioning of the electrical signals on the pins 12' and to make external connections as described above. These functions include, but are not limited to, signal rerouting or grounding and interface protection using passive electronic components such as current/voltage monitors, transient limiters such as capacitive filters and point-to-point wiring. Active electronics such as analog and logic circuitry, matrix switches, power management devices and buffer amplifiers can be utilized to provide discrete event monitoring, integrated built-in test augmentation and diagnostics, signal processing, interface diagnostics and/or signal conditioning. Circuitry 40', on the other hand, may take the form of microprocessing circuitry and may include static RAM and ROM as well as non-volatile memory. In that event, the circuitry can provide discrete event recordation and decision based signal conditioning/diagnostics.

Complex systems, such as avionics, require substantial testing when being upgraded with new equipment and/or munitions. In order to ensure the operation of the new equipment or munitions, it is highly desirable to perform substantial testing in flight without the adding of new wiring to the test aircraft.

The retrofitting of an aircraft to add new wiring to add new equipment and/or munitions is a complex process which can require many months of modification time and involve substantial expense. Furthermore, the new wiring adds weight to the aircraft and takes up space which is always disadvantageous in any aircraft design and is especially so with high performance aircraft in which high speed maneuverability is important.

Furthermore, the testing of new equipment or munitions which are retrofitted to an aircraft requires high bandwidth to transmit test data from the new systems or munitions to a collection point where analysis of the operation of the new equipment and/or munitions is performed. Furthermore, testing in flight, after the retrofitting of new equipment and/or munitions, requires flexibility in the test regimen, such as the timing of acquisition of data from diverse data sources which are required to be accessed to evaluate the performance of the new equipment, the choice of which data source from which obtain test data is to be obtained, and furthermore, the overall parameters of testing.

### SUMMARY OF THE INVENTION

The present invention provides a removable non-intrusive data collection system and method which is utilized to test existing equipment or the addition of new equipment to an existing system. The new equipment may, without limitation, be retrofitted to an airframe and may include munitions. The invention facilitates testing of diverse types of existing and new equipment or systems within the system being tested without the addition of wiring to the acquire test data to support the testing system's testing regime.

With the invention, a master processor is added to the system being tested which communicates, either wirelessly or by wireline communications over the power bus of the system being tested, to at least one and typically a plurality of slave processors. Each slave processor receives commands from the master processor to control the overall test regime of the system being tested. Each slave processor is coupled to a device interface which is coupled to a data source within the system being tested from which data is acquired. The data source may, without limitation, be at least one sensor within the system being tested, a data transmission line, which has been retrofitted to contain an insert wafer in accordance with the Assignee's United States Patent 5,290,191, to gather data transmitted from a data source providing information over the data transmission line, at least one analog signal source, or a digital data bus.

Each device interface may be powered by a power supply obtaining electrical power from the system being tested which, in an aircraft typically would convert the 120 volt, 400 Hz., AC power into the appropriate AC or DC potentials necessary to operate the testing system. Without limitation, the power supply may provide either 28 volts DC or 5 volts DC which is obtained from rectification of the aforementioned 120 volt, 400 Hz, AC power supply typically present on an aircraft.

The use of the insert wafer is non-intrusive and permits the obtaining of data by inserting the wafer within existing data connections, such as connected male and female data connectors which connect data cables to particular systems such as, but without limitation, in an aircraft.

The device interfaces convert the native mode data input which, as described above, may be any one or more of analog or digital or from a digital data bus without limitation into a common data protocol used by all of the processors in the testing system. The native mode data input, regardless of format, and most often from multiple data formats, are inputted to the different device interfaces from different data sources within the system being tested. The native mode data format is converted to a data protocol used by all of the processors of the system, such as, but not limited to, the Transmission Control Protocol/Internet protocol (TCP/IP). The device interfaces function to capture diverse forms of data and to format the captured data, including conversion from analog to digital, into the data common protocol used by all of the processors in the testing system.

Each slave processor controls the acquisition of test data by the associated device interface, receives the formatted data output from the device interface, and formats the received data output into a data transmission format. A media interface is coupled to each of the slave processors and functions as a wireless or wireline modem for modulating transmissions into the aforementioned data transmission protocol from the slave processor to the master processor and demodulates received transmissions from the master processor, also in the same data transmission protocol, which are forwarded to the slave processor as part of the control of the testing procedure.

A media interface is also coupled to the master processor. The media interface functions as a modem. The media interface demodulates data transmissions originating from the modems associated with the slave processors and outputs the transmission in the common data protocol which all processors of the testing system use to the master processor. Furthermore, the media interface modulates commands and other transmissions outputted from the master processor which are to be transmitted to the slave processors into the same data transmission protocol used by the media interfaces associated with the slave processors.

The data transmissions between the modem interfaces are transmitted either wirelessly or if the tested system power bus is to be used with a wireline transmission over the tested system power bus to which the testing system is electrically connected.

Any known modulation/demodulation methodology may be used by the testing system modems. However, one form of modulation which is used in a preferred embodiment is Orthogonal Frequency Division Multiplexing (OFDM), which is well known.

Each of the processors in the system function as nodes in a distributed computer network. The processors are interconnected by the modulated data transmissions over either the tested system power bus or by wireless transmissions. One embodiment of the present invention utilizes the aforementioned OFDM with the data being transmitted in the testing system either wirelessly or over the tested system power bus at speeds such as, but not limited to, 10 Mbits per second. The master processor has the capability to support numerous output functions to diverse devices, including that of a memory loader verifier (MLV), which is a laptop computer interfaced to the testing system to input the control of the test regime and extract data, telemetry support which provides the transmission of data from the master processor to external locations, the recording of data, and any other output function which is desired.

The distributed processing architecture of the present invention, which utilizes a master processor/slave processor relationship, permits great flexibility in the configuration and control of the testing provided by the testing system. The master processor transmits commands to the slave processors in the system to control the complete test regime including, but not limited to, the acquisition of data by the device interfaces; the configuration of the data sources from which data will be obtained; the timing of the test interval and the timing within the test interval at which individual data sources will have data acquired such as, but not limited to, time multiplexing; and the setting of test parameters for the obtaining of data. The test parameters may control a threshold for determining if data is to be obtained. The test parameters are transmitted to each associated device interface to control the acquisition of data from the associated data source. The master/slave architecture supports bidirectional data flow between the master and the slave processors.

While a preferred implementation of the test system is on airframes, such as military aircraft, the present invention may be used in diverse applications where the retrofitting of new equipment requires testing to verify the operation of retrofitted new equipment without invasive effects or substantial modification of the system being tested including, but not limited to, the addition of new wiring.

A testing system for testing a system having at least one data source from which test data is acquired during testing of the system in accordance with the invention includes at least one interface, each interface being coupled to a data source, which acquires test data from the data source coupled thereto and converts the test data into a data output formatted with a data protocol; a slave processor, coupled to each interface, which controls acquisition of test data by the interface coupled thereto, and processes the data output received from the interface which is transmitted as a data transmission; and a master processor which receives the data transmission and controls the testing of the system by transmitting commands to each slave processor; and wherein each slave processor, in response to a received command, controls the interface coupled thereto in accordance with the command to cause the interface to acquire the test data from the data source coupled thereto. The master processor may provide output data formatted for transmission to external equipment and may control transmission of the output data, formatted for transmission to the external equipment, to the external equipment. A modulator may be coupled to each slave processor, each modulator modulating the processed data output which is wirelessly transmitted from the modulator. Each modulator may be a modem which modulates the processed data output into a wireless data transmission which is transmitted to the master processor, demodulates a wireless transmission of commands from the master processor and outputs the commands to the slave processor coupled thereto; and another modem may be coupled to the master processor, which demodulates the wireless data transmission, outputs the received wireless transmission to the master processor, receives the commands from the master processor and modulates the received commands which are transmitted wirelessly to the at least one slave processor. At least one modulator may couple to each slave processor which each modulator modulating the processed data output which is transmitted by a power bus of the system being tested to the master processor. Each modulator may be a modem which modulates the data output into a wireline data transmission which is transmitted to the master processor, demodulates a wireline transmission of commands from the master processor and outputs the commands to the slave processor coupled thereto; and another modem may be coupled to the master processor which demodulates the wireline data transmission which outputs the wireline transmission to the master processor, receives the commands from the master processor and modulates the received commands which are transmitted by wireline to the at least one slave processor. The commands may control from which of a plurality of data sources test data is acquired during testing by commanding the slave processors responding to the received commands to control the interface coupled thereto to acquire the test data.

Each interface may convert the data acquired from the data source into a single data protocol used by all of the master and slave processors. The single data protocol may be TCP/IP. The power bus may be coupled to each slave processor by an insert between the data source and the interface. The insert may be a wafer which may be disposed between connected electrical connectors which are part of an electrical signal conduit for passing data to or from the data source during operation of the system being tested. The system under test may be a vehicle which may be an airframe. At least one data source may be a data bus, a sensor which is a vehicle control, or an analog data source.

Each slave processor may control at least one of a threshold which determines if test data is to be acquired dependent upon the threshold, a time at which test data is to be acquired during a test interval or a test parameter controlling conditions pertaining to the acquiring of the test data.

The master processor may also control timing of the system by transmitting commands to each slave processor.

A method of testing a system having at least one data source from which test data is obtained during testing of the system includes providing the system being tested with at least one interface with each interface being coupled to a data source, a slave processor coupled to each data source and a master processor coupled to each slave processor; transmitting commands to each slave processor which control the acquisition of test data by the interface coupled thereto; each slave processor decoding a received command and using the decoded command to control the interface coupled thereto which controls acquisition of the test data from the data source coupled thereto; each interface, which acquires test data converting the acquired test data from a native mode format into a data output formatted with a data protocol with all interfaces producing an output of a common protocol; and each slave processor receiving the data output and processing the data output received from the interface which is transmitted to the master processor. The transmissions between the at least one slave processor and the master processor may be wireless or over a power bus of the system being tested.

### BRIEF DESCRIPTION OF THE DRAWINGS

Figs. 1A and 1B illustrate a prior art interface conditioning insert wafer in accordance with the Assignee's United States Patent 5,290,191 which may be used in the practice of the present invention.

Fig. 2 illustrates a system diagram of a testing system in accordance with the present invention used in testing of an existing system.

### DESCRIPTION OF THE PREFERRED EMBODIMENT

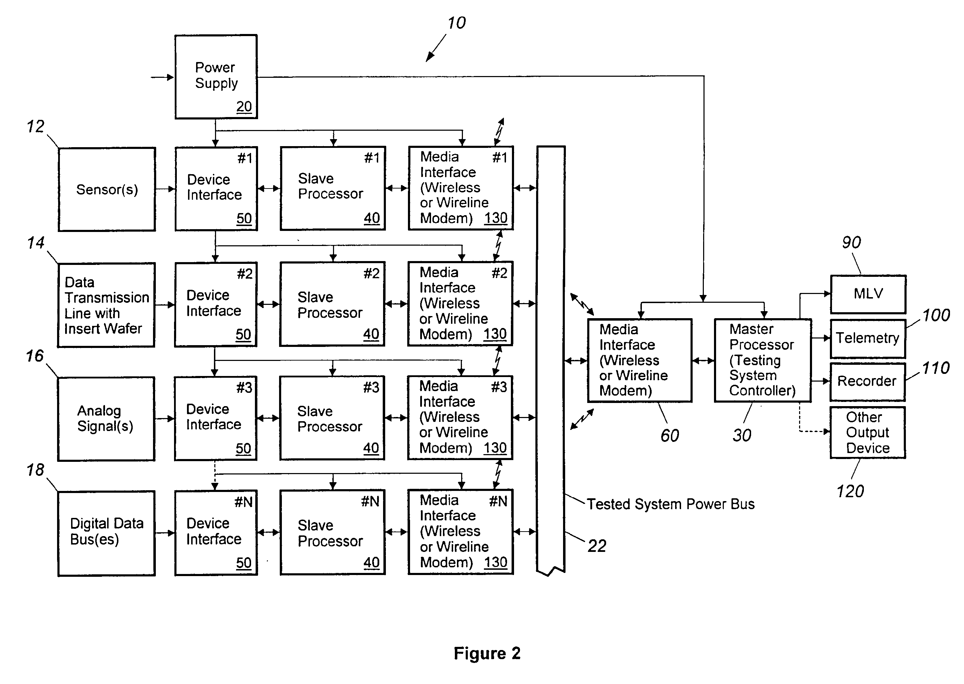

Fig. 2 illustrates a testing system 10 in accordance with the present invention. The testing system 10 is connected to an existing system such as, without limitation, an airframe to test the addition of new equipment or munitions to be retrofitted thereto. The system being tested may contain numerous existing data generating devices or systems to be tested or may have new data generating devices or systems added thereto which are part of the retrofitting of the existing system with new devices, systems, and/or munitions.

The possible existing or new devices to be tested are of a diverse nature. Sensors 12 provide an output from devices such as, but not limited to, vehicle controls such as pilot controls in order to determine the position of the sensors during the testing. Data transmission lines 14, which have been opened to include an insert wafer in accordance with the Assignee's aforementioned United States Patent 5,290,191, provide the gathering of data from a data transmission line connecting a device or system in the system being tested to another device or system. At least one analog signal source 16 such as, but not limited to, gauges, provides read outs of voltages, temperature, etc. Digital data buses 18 represent sources of computer generated data in the system being tested. Each of the aforementioned data sources 12, 14, 16, and 18 generate data to be gathered in any native data mode, which may be without limitation analog or digital data including digital data encoded with a particular data bus protocol. The tested system power bus 22 may be utilized as the data transmission path as described below if a wireline data transmission protocol is used between the processors in the system. Sensors may also be wired in discretes as long as the discretes have power included in them.

Power supply 20 converts the tested system power into the voltage required to operate the testing system which, in a preferred application, without limitation, may utilize 28 volts DC and 5 volts DC which is utilized in airframe applications. Power supply 20 may, without limitation, rectify AC, such as 400 Hz, 120 volt AC, into the aforementioned DC potentials for powering each of the components in the system.

The testing system 10 is based upon a distributed processor architecture having a master processor 30 and at least one slave processor 40 which are under the control of the master processor. The master processor 30 functions as a testing system controller. The master processor 30 controls the testing and /or timing of the system by transmitting commands and/or data to each slave processor 40. Each slave processor 40, in response to a received command and/or data, decodes the command and/or data and executes the command to control a device interface 50 coupled thereto. The device interface 50 controls the acquisition of data from the associated data source which is one of the data sources 12, 14, 16 and 18. A preferred embodiment of the present invention has a single slave processor 40 associated with each device interface 50 which controls acquiring of data from a single data source which is one of the data sources 12, 14, 16 and 18. However, the present invention is not limited to a one to one relationship between the slave processors, device interfaces and data sources.

Communications of information between the master processor 30 and the slave processors 40 are bidirectional. Either wireless or wireline transmissions may be used depending upon the system being tested to transmit the bidirectional communications. The master processor 30 has an associated media interface 60 which functions as a wireless or wireline modem depending upon whether the tested system power bus 22 is used for wireline bidirectional communications or wireless communications are used. The media interface 60 demodulates the data transmissions from the media interfaces 130 associated with the slave processors 40, as described below, which may be without limitation OFDM, and provides an output to the master processor 30 in the common data protocol used by the processors such as, but not limited to, TCP/IP. The media interface 60 also modulates the commands and data which are transmitted from the master processor to each of the slave processors 40 into the data transmission protocol which may be without limitation OFDM. The media interface 60 supports one or both of wireless or wireline transmission over the tested system power bus 22.

The media interfaces 130 modulate the transmissions from the slave processors 40, which may be in TCP/IP, into the data transmission protocol, such as, without limitation, OFDM and demodulate the transmissions from the media interface 60 which may be without limitation OFDM and are outputted to the slave processors 40 for processing. The media interfaces 130 support one or both of wireline or wireless transmission over the tested system power bus 22.

For wireline transmissions, connections between the media interfaces 130 and the tested system power bus 22 and between the tested system power bus and the media interface 60 may be by the prior art insert wafer 10 (not illustrated) but are not limited thereto. Other types of inserts besides the prior art insert wafer 10' may be used in the practice of the invention to electrically connect the testing system to parts of the tested system.

The device interfaces 50 have a primary function of acquiring data. The acquired data may be of a diverse nature in either analog or digital native mode form as described above. The device interfaces 50 function to convert the native mode form of the data, whether in analog or digital, into a protocol used by both the master processor 30 and slave processor 40, such as, but not limited to TCP/IP. Utilization of TCP/IP by each of the slave processors 40 facilitates the testing system's transmission of the data between the processors of the testing system and to external devices such as a MLV 90, external telemetry 100 for transmitting the information to other locations, a recorder 110 for recording the data and any other output application 120. Furthermore, the device interface 50 is commanded from the associated slave processor 40 of how, when and the type of data to acquire. For example, in a particular test regime, it may not be necessary to obtain test data from all of the data sources 12, 14, 16 and 18. The slave processor 40 may command a data interface 50 not to obtain any data during a particular test regime or furthermore, may assign time slots in a multiplexed manner under which data is to be obtained for transmission to the master processor 30 or assign thresholds or other filters to control the nature of the acquired data. The assigning of time slots avoids overloading the bandwidth transmission capability of either the wireless or wireline transmission medium over the tested system power bus 22. Additionally, each device interface 50 may be commanded by the associated slave processor 40 to use test parameters resulting in data being acquired only under circumstances when the data is sensed to be of significance in evaluating the overall performance of the system being tested.

The slave processors 40 receive the data output from their associated data interface 50, which preferably has been formatted into a common protocol utilized by the master processor 30 and the slave processors 40, and formats the received data output into a data format which is conditioned to be modulated by a media interface 130 into a data transmission protocol which may be either wireless or a wireline modem. The function of the media interfaces 130 is analogous to the media interface 60.

The present invention may be used with equal facility with either wireless or wireline bidirectional data transmissions between the master processor 30 and the slave processors 40. The choice of whether to utilize the test system power bus 22 or a wireless as the transmission vehicle depends upon the particular application.

The data output from the master processor 30 is formatted for transmission to external equipment such as the aforementioned MLV 90, telemetry devices 100, recorder 110 or other output 120 and controls transmission to the aforementioned devices.

The master/slave relationship between the master processor 30 and the slave processors 40 facilitates flexibility in the designing and execution of the testing regime by the testing system 10 of the system being tested. The acquisition of data from each of the data sources 12, 14, 16 and 18 from which test data are desirable to determine operation of the tested system is fully programmable to permit variation of not only the data sources from which test data are obtained, but furthermore, control of how and when the acquiring of data occurs and the overall parameters of the testing regime.

While the present invention has a preferred application for testing the retrofitting of airframes with new equipment and/or munitions, it should be understood that the present invention is not limited to retrofitting applications and may be used with any new systems where new wiring to support testing is undesirable. Furthermore, while the limited spatial considerations which are typically present in sophisticated vehicles are a preferred application of the present invention, it should be understood that the present invention may be used to test any existing vehicle whether stationary or moving.

While the present invention has been described in terms of its preferred embodiments, it should be understood that numerous modifications may be made thereto. It is intended that all such modifications fall within the scope of the appended claims.

## Claims

1. A testing system for testing a system having at least one data source from which test data is acquired during testing of the system comprising:
at least one interface, each interface being coupled to a data source, which acquires test data from the data source coupled thereto and converts the test data into a data output formatted with a data protocol;
a slave processor, coupled to each interface, which controls acquisition of test data by the interface coupled thereto, and processes the data output received from the interface which is transmitted as a data transmission and
a master processor which receives the data transmission and controls the testing of the system by transmitting commands to each slave processor; and wherein
each slave processor, in response to a received command, controls the interface coupled thereto in accordance with the command to cause the interface to acquire the test data from the data source coupled thereto.

2. A testing system in accordance with claim 1 wherein:
the master processor provides output data formatted for transmission to external equipment and controls transmission of the output data, to the external equipment.

3. A testing system in accordance with claim 1 or 2 comprising:
a modulator coupled to each slave processor, each modulator modulating the processed data output which is wirelessly transmitted from the modulator.

4. A testing system in accordance with claim 3 wherein:
each modulator is a modem, modulates the processed data output into a wireless data transmission which is transmitted to the master processor, demodulates a wireless transmission of commands from the master processor and outputs the commands to the slave processor coupled thereto; and
another modem, coupled to the master processor, which demodulates the wireless data transmission, outputs the wireless transmission to the master processor, receives the commands from the master processor and modulates the received commands which are transmitted wirelessly to the at least one slave processor.

5. A testing system in accordance with claim 1 comprising:
at least one modulator coupled to each slave processor, each modulator modulating the processed data output which is transmitted by a power bus of the system being tested to the master processor.

6. A testing system in accordance with claim 1 or 2 wherein:
the commands control from which of a plurality of data sources test data is acquired during testing by commanding the slave processors responding to the received commands to control the interface coupled thereto to acquire the test data.

7. A testing system in accordance with claim 1 or 2 wherein:
each interface converts the data acquired from the data source into a single data protocol used by all of the master and slave processors.

8. A testing system in accordance with claim 7 wherein:
The single data protocol is TCP/IP.

9. A testing system in accordance with claim 1 wherein:
each slave processor controls at least one of a threshold which determines if test data is to be acquired dependent upon the threshold, a time at which test data is to be acquired during a test interval or a test parameter controlling conditions pertaining to the acquiring of the test data.

10. A testing system in accordance with claim 1 wherein:
the master processor controls timing of the system by transmitting commands to each slave processor.

11. A method of testing a system having at least one data source from which test data is obtained during testing of the system comprising:
providing the system being tested with at least one interface with each interface being coupled to a data source, a slave processor coupled to each data source and a master processor coupled to each slave processor;
transmitting commands to each slave processor which control the acquisition of test data by the interface coupled thereto;
each slave processor decodes a received command and uses the decoded command to control the interface coupled thereto which controls acquisition of the test data from the data source coupled thereto;
each interface, which acquires test data, converts the acquired test data from a native mode format into a data output formatted with a data protocol with all interfaces producing an output of a common protocol; and
each slave processor receives the data output and processes the data output received from the interface which is transmitted to the master processor.

12. A method in accordance with claim 11 wherein:
transmissions between the at least one slave processor and the master processor are wireless.

13. A method in accordance with claim 11 wherein:
transmissions between the at least one processor and the master processor are over a power bus of the system being tested.
